# EUROPÄISCHE PATENTSCHRIFT

(11) **EP 0 757 769 B1**
(45) Veröffentlichungstag und Bekanntmachung des Hinweises auf die Patenterteilung: **26.01.2000**
(21) Anmeldenummer: 95918592.7
(22) Anmeldetag: 24.04.1995
(51) Int. Cl.: F16L 15/04

(54) **VERFAHREN ZUM HERSTELLEN EINER ROHRVERBINDUNG**
METHOD OF MANUFACTURING A PIPE CONNECTOR
PROCEDE DE PRODUCTION D'UN RACCORD

(30) Priorität: 23.04.1994 DE 4414256
(43) Veröffentlichungstag der Anmeldung: 12.02.1997
(73) Patentinhaber: Bopp, Gertrud, 78662 Bösingen (DE)
(72) Erfinder: Marzahl, Albert, 78054 Villingen-Schwenningen (DE)
(74) Vertreter: Weiss, Peter, Dr. rer. nat.
(86) Internationale Anmeldenummer: EP9501533
(87) Internationale Veröffentlichungsnummer: WO9529359

(56) Entgegenhaltungen:
- FR-A- 1 571 744
- GB-A- 274 685
- US-A- 4 835 873

## Beschreibung

Die Erfindung betrifft ein Verfahren zum Herstellen eines Verbindungselementes, über welches Rohre und/oder Schläuche miteinander abgedichtet verbunden werden.

Die Verbindung zweier Rohre beispielsweise im Sanitär- oder Heizungsbereich geschieht in der Regel durch Löten oder durch spezielle Fittings. Beim Löten wird eine Verbindungshülse verwendet, die einen Innendurchmesser aufweist, der in etwa dem Außendurchmesser der zu verbindenden Rohre entspricht. Diese Verbindungshülse wird auf das Rohr aufgeschoben und durch Lötlot mit dem Rohr verbunden und abgedichtet. Dieses Verfahren ist umständlich und weist erhebliche Nachteile bezüglich der Abdichtung auf. Reparaturen sind nur in seltenen Fällen möglich.

Bei der Verwendung von Fittingen wird in der Regel eine Randkante eines Rohres umgebördelt und das Rohr dann mit einem Rohrabschnitt od.dgl. mittels einer Ueberwurfmutter verbunden. Auch hier sind erhebliche Nachteile bezüglich der Dichthaltung, Montage und dem Auswechseln zu verzeichnen.

Ähnliches gilt auch für die Verbindung zweier Schläuche oder für die Verbindung von Rohren mit Schläuchen.

Aus der US-A 4 835 873 ist ein Verbindungselement bekannt, bei dem zwei Rohre mit entsprechenden Außengewindeabschnitten über einen Hülsenabschnitt miteinander verbunden werden. Dabei treffen die Rohrkanten auf einen Dichtring, der in diesen Hülsenabschnitt eingelegt ist. Eine ähnliche Anordnung zeigt auch die FR-A 1 571 744.

In beiden Fällen bereitet das Einlegen des Dichtringes erhebliche Schwierigkeiten, da der Dichtring einen Außendurchmesser aufweist, der größer als ein Innendurchmesser der beidseitig bis zum Einstich eingebrachten Gewinde ist. Andererseits darf der Einstich keinen Innendurchmesser aufweisen, der in etwa demjenigen der beidseitigen Gewinde entspricht, da sonst der Dichtring nicht gesichert festgehalten wird.

Der vorliegenden Erfindung liegt die Aufgabe zugrunde, ein Verfahren der o.g. Art zu entwickeln, durch das ein Verbindungselement hergestellt wird, mit welchem zwei Rohre auf einfache Art und Weise miteinander zu verbinden sind, wobei die Abdichtung der beiden Rohre zueinander wesentlich verbessert ist. Ferner ist ein Austausch bzw. eine Reparatur wesentlich vereinfacht.

Zur Lösung dieser Aufgabe führt, daß in eine Axialbohrung eines Hülsenabschnittes ein Einstich und von einer Seite her bis zu diesem Einstich ein erstes Gewinde eingebracht, von der anderen Seite her die Axialbohrung auf etwa einen Durchmesser eines Dichtringes aufgebohrt, dieser in den Einstich eingelegt und danach ein zweites Gewinde in die Axialbohrung bis zum Einstich durch Materialverdrängung in die Axialbohrung eingeformt wird, wodurch der Einstich quasi verschlossen wird.

Der wesentliche Vorteil dieses Verfahrens liegt darin, daß ohne irgendwelche Schwierigkeiten ein Dichtring etwa mittig in die Rohrverbindung eingebracht werden kann, dort nicht mehr kippt, sondern relativ festgelegt ist, so daß eine gesicherte und gute Abdichtung von zwei aufeinandertreffenden Randkanten zweier Rohre erfolgen kann.

In erster Linie geschieht dies dadurch, daß nach dem Einlegen des Dichtringes in den aufgebohrten Teil der Axialbohrung das Einbringen des zweiten Gewindes durch einen Verformvorgang geschieht. Bei diesem Verformvorgang wird das Gewinde durch Materialverdrängung erzeugt, wodurch gleichzeitig der Einstich quasi verschlossen wird. Der eingelegte Dichtring kann nun nicht mehr aus dem Einstich herausfallen, sondern sich lediglich im Bereich des Einstiches bewegen. Da jedoch bevorzugt der Durchmesser des Einstichs etwa dem Durchmesser des Dichtringes entspricht oder geringfügig größer ist, kann der Dichtring in dem Einstich nicht kippen. Er wird sicher gehalten, selbst wenn eine Randkante eines Rohres vor der Randkante des zweiten Rohres auf den Dichtring auftrifft. In diesem Fall findet lediglich ein axiales Verschieben des Dichtringes innerhalb des Bereiches des Einstiches statt, weshalb bevorzugt die Breite des Einstiches etwas größer ist als die Breite des Dichtringes.

Das erste Gewinde kann im übrigen ebenfalls in die Axialbohrung eingeformt oder aber beispielsweise auch eingeschnitten bzw. eingestochen sein.

In einem bevorzugten Ausführungsbeispiel der Erfindung besitzen das erste und das zweite Gewinde eine gegenläufige Gewindesteigung. Diese Ausgestaltung hat den Vorteil, daß die Rohrverbindung bei einer Verbindung von Rohren mit gleicher Steigung ihres Außengewindes nur in eine Richtung gedreht werden muß, um die beiden Rohrabschnitte miteinander zu verbinden. Dies erleichtert die Montage wesentlich. Im Rahmen der Erfindung liegt natürlich auch die Einbringung von zwei Rechts- oder zwei Linksgewinden.

Eine nach diesem Verfahren hergestellte Rohrverbindung zum abgedichteten Verbinden zweier Rohre weist in einem Einstich eines Axialdurchgangs eines Hülsenabschnittes einen Dichtring auf, auf die Randkanten der Rohre auftreffen, wobei beidseits zum Einstich hin jeweils ein Gewinde verläuft. Eine derartige Rohrverbindung hat den wesentlichen Vorteil, daß nicht nur ein erstmaliges Aufbringen auf die Rohre und ein Verbinden der Rohre erleichtert ist, sondern auch, daß jederzeit die Verbindung wieder gelöst und beispielsweise beschädigte Rohre ausgetauscht werden können.

Sollen die Rohre ein Medium führen, so bietet es sich an, daß in den Dichtring eine entsprechende Bohrung eingebracht ist, durch welches das Medium strömen kann. Zum besseren Führen oder auch zum Steuern eines Medienstroms, falls gewünscht, kann diese Bohrung konisch ausgeformt sein und/oder die Lochränder eine Fase aufweisen. Das Loch in dem Dichtring kann einen unterschiedlichen Durchmesser aufweisen. Hierdurch wird ein geschwünschter Mediumdurchfluss gesteuert. Insofern kann dieses Loch Ventilfunktion übernehmen. Für die Wahl des Werkstoffes für den Dichtring besteht keine Beschränkung. Die Wahl erfolgt je nach Kundenwunsch.

Zum besseren Angriff für ein Werkzeug soll der Hülsenabschnitt eine entsprechende Ausgestaltung aufweisen. Hier bietet sich die Ausbildung als Sechskant an. Es sind aber beliebige andere Formen denkbar.

Wenn oben von der Verbindung von Rohren gesprochen wird, so gilt dies genauso für die Verbindung von einem Rohr mit einem Schlauch bzw. für die Verbindung von zwei Schläuchen oder ähnlichen querschnittlich, kreisringförmigen Gegenständen miteinander. Der Rohrverbinder ist außerordentlich vielfältig einsetzbar. Er kann genauso in einem Kraftfahrzeug, wie auch im Maschinenbau, bei Nutzfahrzeugen, im Sanitär- und Heizungsbereich und bei allen sonstigen Produkten Anwendung finden, in denen eine Rohr- und/oder Schlauchverbindung vorgesehen ist.

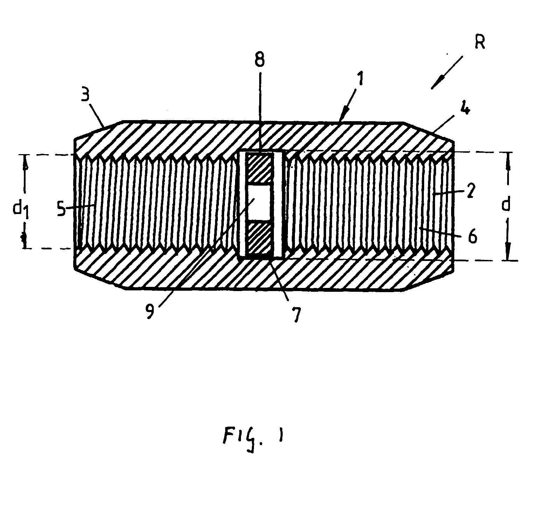

Die Erfindung wird anhand der nachfolgenden Beschreibung bevorzugter Ausführungsbeispiele sowie anhand der Zeichnung näher erläutert; diese zeigt in ihrer einzigen Figur einen Längsschnitt durch eine erfindungsgemäße Rohrverbindung R. Diese Rohrverbindung R weist einen Hülsenabschnitt 1 auf, der eine Axialbohrung 2 besitzt. Bei beiden ist dem Hülsenabschnitt 1 eine Fase 3 bzw. 4 angebracht.

In die Axialbohrung 2 ist von der einen Seite her ein Linksgewinde 5 und von der anderen Seite her ein Rechtsgewinde 6 eingebracht. Beide Gewinde 5 und 6 werden etwa mittig durch einen Einstich 7 voneinander getrennt, dessen Durchmesser d etwas größer ist als ein Durchmesser d₁ der Gewinde 5 bzw. 6.

In dem Einstich 7 sitzt ein Dichring 8, in den etwa mittig eine Bohrung 9 eingebracht ist. Die Bohrung 9 kann je nach Kundenwunsch konisch geformt sein oder an den Bohrungskanten Fasen aufweisen.

Die Herstellung dieser erfindungsgernäßen Rohrverbindung R geschieht folgendermaßen:

In einem ersten Arbeitsgang wird der Hülsenabschnitt 1 aus einem gewünschten Material in einer gewünschten Größe und in einer gewünschten Länge hergestellt und, falls notwendig, mit den Fasen 3 bzw. 4 versehen. In diesem Hülsenabschnitt 1 kann bereits eine Axialbohrung oder ein Axialdurchgang vorhanden sein oder aber nachträglich eingebracht werden. Beispielsweise besitzt diese Axialbohrung zum Herstellen einer M16 x 1,5 einen Kerndurchmesser von 14,5 mm.

In diese Axialbohrung wird der Einstich 7, beispielsweise durch Fräsen oder Einstechen, eingebracht und zwar mit einem Durchmesser d, welche im wesentlichen von dem Durchmesser des Dichtringes 8 abhängig ist. Der Durchmesser d entspricht in etwa dem Durchmesser des Dichtringes 8.

Nunmehr wird von der einen Seite ein Gewinde 5 bzw. 6 bis zu dem Einstich 7 eingeformt, beispielsweise eingeschnitten. Von der anderen Seite erfolgt ein Aufbohren für einen Formdurchmesser von etwa 15,5 mm. Dies erlaubt ein einfaches Einlegen des Dichtringes in den Einstich 7, da der Dichtring in etwa einen Durchmesser von 15,5 mm hat, der im übrigen in einem bevorzugten Ausführungsbeispiel auch dem Durchmesser d des Einstiches 7 entspricht.

Nunmehr wird von der anderen Seite her das andere Gewinde 6 bzw. 5 in die Axialbohrung eingeformt und zwar durch Materialverdrängung, wodurch wiederum ein Kerndurchmesser von 14,5 mm entsteht. Hierdurch wird der Einstich 7 quasi verschlossen, so daß der Dichtring nicht aus dem Einstich 7 fallen kann. Da es sich bei dem Gewinde um ein Links- und um ein Rechtsgewinde 5 und 6 handelt, braucht die Rohrverbindung beim Verbinden zweier Rohre nur in eine Richtung gedreht zu werden, wobei die Randkanten der Rohre sich aufeinander zu bewegen. Diese Randkanten treffen dann auf den Dichtring 8, so daß ein Durchgang eines Strömungsmediums von einem Rohr zum anderen nur durch das Loch 9 des Dichtringes 8 erfolgen kann. Ansonsten sind die Randkanten der Rohre vollständig abgedichtet. Dies wird noch dadurch verbessert, wenn in die Randkanten der Rohre beispielsweise eine Ringzacke eingeformt ist, die sich in den Dichtring 8 einbohrt.

Bei einer Prüfung der Dichthaltung dieser Verbindung R wurde festgestellt, daß die Rohrverbindung ohne weiteres 50 bar aushält. Je nach Dichtring 8 und einem Anziehen der Rohrverbindung R können noch wesentlich größere Drücke unbeschadet überstanden werden.

Die Gewinde 5 und 6 können im übrigen, falls gewünscht, einen unterschiedlichen Nenndurchmesser aufweisen, lediglich ihre Steigung sollte, bis auf speziell gewünschte Ausnahmen, gleich sein.

## Patentansprüche

1. Verfahren zum Herstellen eines Verbindungselementes, über welches Rohre und/oder Schläuche miteinander abgedichtet verbunden werden, wobei in eine Axialbohrung (2) eines Hülsenabschnittes (1) ein Einstich (7) und von einer Seite her bis zu diesem Einstich (7) ein erstes Gewinde (5) eingebracht, von der anderen Seite her die Axialbohrung (2) auf etwa einen Durchmesser (d) eines Dichtringes (8) aufgebohrt, dieser in den Einstich (7) eingelegt und danach ein zweites Gewinde (6) in die Axialbohrung (2) bis zum Einstich (7) durch Materialverdrängung in die Axialbohrung (2) eingeformt wird, wodurch der Einstich (7) quasi verschlossen wird.

2. Verfahren nach Anspruch 1, dadurch gekennzeichnet, daß das erste Gewinde (5) mit einer zum zweiten Gewinde (6) gegenläufigen Gewindesteigung eingebracht wird.

3. Verfahren nach Anspruch 1 oder 2, dadurch gekennzeichnet, daß der Einstich (7) mit einem etwa dem Durchmesser (d) des Dichtringes (8) entsprechenden Durchmesser eingebracht wird.

4. Verfahren nach einem der Ansprüche 1-3, dadurch gekennzeichnet, daß der Einstich (7) mit einem Durchmesser (d) eingebracht wird, der größer als derjenige des Kerndurchmessers (d₁) des Gewindes (5) ist.

5. Verfahren nach wenigstens einem der Ansprüche 1 bis 4, dadurch gekennzeichnet, daß in den Dichtring (8) vor dem Einlegen in den Einstich (7) eine Bohrung (9) eingebracht wird.

6. Verfahren nach Anspruch 5, dadurch gekennzeichnet, daß das die Bohrung (9) konisch angebracht wird und/oder die Bohrungskanten mit einer Fase versehen werden.

7. Verfahren nach wenigstens einem der Ansprüche 1 bis 6, dadurch gekennzeichent, daß der Hülsenabschnitt (1) als Sechskant ausgebildet wird.

## Claims

1. Method of producing a connecting element, by which pipes and/or tubes are interconnected in a sealed manner, a recess (7) being introduced into an axial bore (2) of a sleeve portion (1), and a first thread (5) being introduced as far as this recess (7) from one end, the axial bore (2) being bored-out from the other end, to substantially a diameter (d) of a sealing ring (8), this sealing ring being fitted into the recess (7), and thereafter a second thread (6) being moulded into the axial bore (2) as far as the recess (7) by a displacement of material into the axial bore (2), whereby the recess (7) is quasi closed.

2. Method according to claim 1, characterised in that the first thread (5) is provided with a thread pitch which is opposite to that of the second thread (6).

3. Method according to claim 1 or 2, characterised in that the recess (7) is provided with a diameter corresponding substantially to the diameter (d) of the sealing ring (8).

4. Method according to one of claims 1-3, characterised in that the recess (7) is provided with a diameter (d) which is greater than that of the core diameter (d₁) of the thread (5).

5. Method according to at least one of claims 1 to 4, characterised in that a bore (9) is introduced into the sealing ring (8) prior to insertion in the recess (7).

6. Method according to claim 5, characterised in that the bore (9) is made conically and/or the bore edges are provided with a chamfer.

7. Method according to at least one of claims 1 to 6, characterised in that the sleeve portion (1) has a hexagonal configuration.

## Revendications

1. Procédé de réalisation d'un raccord pour relier de manière étanche un tuyau et/ou un tube,
selon lequel,
dans un perçage axial (2) d'un segment de manchon (1) on réalise une gorge (7) et partant d'un côté jusqu'à la gorge (7) on réalise un premier filetage (5) et à partir de l'autre côté on perce le perçage axial (2) à un diamètre (d) correspondant sensiblement au joint d'étanchéité (8), on met en place le joint dans la gorge (2) puis on forme un second filetage (6) dans le perçage axial (2) jusqu'à la gorge (7) par refoulement de matière dans le perçage axial (2) pour fermer quasiment la gorge (7).

2. Procédé selon la revendication 1,
caractérisé en ce que
le premier filetage (5) est réalisé avec un pas opposé à celui du second filetage (6).

3. Procédé selon la revendication 1 ou 2,
caractérisé en ce qu'
on réalise la gorge (7) avec un diamètre correspondant sensiblement au diamètre (d) du joint d'étanchéité (8).

4. Procédé selon l'une des revendications 1 à 3,
caractérisé en ce qu'
on réalise la gorge (7) avec un diamètre (d) supérieur à celui du diamètre primitif (d₁) du filetage (5).

5. Procédé selon l'une au moins des revendications 1 à 4,
caractérisé en ce qu'
on réalise un perçage (9) dans le joint d'étanchéité (8) avant sa mise en place dans la gorge (7).

6. Procédé selon la revendication 5,
caractérisé en ce qu'
on réalise un perçage (9) conique et/ou on munit d'un congé les arêtes du perçage.

7. Procédé selon au moins l'une des revendications 1 à 6,
caractérisé en ce que
le segment de manchon (1) est un sixpans.
